# EUROPEAN PATENT APPLICATION

(11) **EP 3 819 849 A1**
(43) Date of publication of application: **12.05.2021**
(21) Application number: 19830744.9
(22) Date of filing: 24.06.2019
(51) Int. Cl.: G06Q 20/34, G06K 19/07, G06Q 20/22, G06Q 20/24, G06Q 20/28, G06Q 20/32

(54) **PORTABLE ELECTRONIC DEVICE AND IC CARD**

(30) Priority: 02.07.2018 JP 2018125957; 12.06.2019 JP 2019109780
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: KISHIMOTO Ariyuki, Kawasaki-shi, Kanagawa 212-0013 (JP)
(74) Representative: Hoffmann Eitle
(86) International application number: PCT/JP2019/024866
(87) International publication number: WO 2020/008926

(57) **Abstract**

A portable electronic device of an embodiment includes a first value information storage unit, a second value information storage unit, a transaction processing unit, and a switching processing unit. The first value information storage unit stores first value information corresponding to a remaining amount of an amount paid in advance. The second value information storage unit stores second value information capable of being used in a credit transaction settlement. The transaction processing unit performs a prepaid settlement process of performing a settlement by subtracting the first value information stored by the first value information storage unit in accordance with an amount of a transaction. In a case where a predetermined condition based on information relating to the transaction is satisfied, the switching processing unit converts the first value information stored by the first value information storage unit into the second value information, stores the second value information in the second value information storage unit, validates a function of a credit transaction settlement process, and invalidates a function of the prepaid settlement process.

## Description

### [Technical Field]

An embodiment of the present invention relates to a portable electronic device and an IC card.

### [Background Art]

In recent years, portable electronic devices such as an integrated circuit (IC) card having a built-in IC chip have been widely used. In portable electronic devices of the related art, for example, in a case where a credit card is used in a credit settlement (a credit transaction settlement), it takes time to process a credit examination for examining whether a credit settlement is permitted for a user. For this reason, in portable electronic devices of the related art, a credit settlement cannot be used immediately, which sometimes leads to a decrease in convenience.

### [Citation List]

### [Patent Literature]

[Patent Literature 1] Japanese Unexamined Patent Application, First Publication No. 2010-250498
[Patent Literature 2] Japanese Unexamined Patent Application, First Publication No. 2016-71657

### [Summary of Invention]

### [Technical Problem]

A problem to be solved by the present invention is to provide a portable electronic device and an IC card that make it possible to improve convenience.

### [Solution to Problem]

A portable electronic device of an embodiment includes a first value information storage unit, a second value information storage unit, a transaction processing unit, and a switching processing unit. The first value information storage unit stores first value information corresponding to a remaining amount of an amount paid in advance. The second value information storage unit stores second value information capable of being used in a credit transaction settlement. The transaction processing unit performs a prepaid settlement process of performing a settlement by subtracting the first value information stored by the first value information storage unit in accordance with an amount of a transaction. In a case where a predetermined condition based on information relating to the transaction is satisfied, the switching processing unit converts the first value information stored by the first value information storage unit into the second value information, stores the second value information in the second value information storage unit, validates a function of a credit transaction settlement process, and invalidates a function of the prepaid settlement process.

### [Brief Description of Drawings]

Fig. 1 is a diagram illustrating an outward appearance of an IC card of a first embodiment and a configuration example of an IC card system.
Fig. 2 is a diagram illustrating a hardware configuration example of the IC card of the first embodiment.
Fig. 3 is a block diagram illustrating a functional configuration example of the IC card of the first embodiment.
Fig. 4 is a diagram illustrating a data example of a transaction history storage unit of the first embodiment.
Fig. 5 is a flow chart illustrating an example of an operation of the IC card of the first embodiment.
Fig. 6 is a diagram illustrating an example of an operation of the IC card system of the first embodiment.
Fig. 7 is a block diagram illustrating a functional configuration example of an IC card of a second embodiment.
Fig. 8 is a first flow chart illustrating an example of an operation of the IC card of the second embodiment.
Fig. 9 is a second flow chart illustrating an example of the operation of the IC card of the second embodiment.
Fig. 10 is a diagram illustrating an example of an operation of an IC card system of the second embodiment.
Fig. 11 is a block diagram illustrating a functional configuration example of an IC card of a third embodiment.
Fig. 12 is a flow chart illustrating an example of an operation of the IC card of the third embodiment.
Fig. 13 is a block diagram illustrating a functional configuration example of an IC card of a fourth embodiment.
Fig. 14 is a flow chart illustrating an example of an operation of the IC card of the fourth embodiment.
Fig. 15 is a block diagram illustrating a functional configuration example of an IC card of a fifth embodiment.
Fig. 16 is a flow chart illustrating an example of an operation of the IC card of the fifth embodiment.
Fig. 17 is a block diagram illustrating a functional configuration example of an IC card of a sixth embodiment.
Fig. 18 is a flow chart illustrating an example of an operation of the IC card of the sixth embodiment.
Fig. 19 is a block diagram illustrating a functional configuration example of an IC card of a seventh embodiment.
Fig. 20 is a flow chart illustrating an example of an operation of the IC card of the seventh embodiment.
Fig. 21 is a flow chart illustrating an example of a mutual switching operation of card settlement of the IC card of the seventh embodiment.

### [Description of Embodiments]

Hereinafter, a portable electronic device and an IC card of an embodiment will be described with reference to the accompanying drawings.

### (First embodiment)

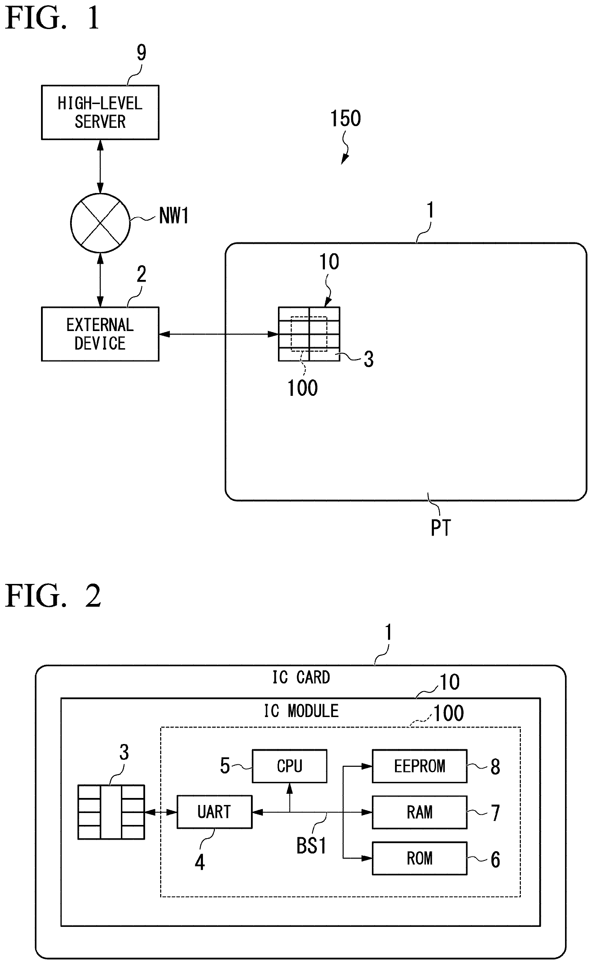

Fig. 1 is a diagram illustrating a configuration example of an IC card 1 and an IC card system 150 of a first embodiment.

As shown in Fig. 1, the IC card system 150 includes the IC card 1, an external device 2, and a high-level server 9.

The IC card 1 includes an IC module 10. The IC module 10 includes a contact portion 3 and an IC chip 100 which is located inside of it.

The IC card 1 is formed by mounting the IC module 10 in, for example, a plastic card substrate PT (an example of a card body). That is, the IC card 1 includes the IC module 10 and the card substrate PT having the IC module 10 embedded therein. In addition, the IC card 1 can communicate with the external device 2 through the contact portion 3.

Meanwhile, in the present embodiment, the IC card 1 will be described as an example of a portable electronic device.

The IC card 1 electrically receives, for example, a command (process request) transmitted by the external device 2 through the contact portion 3, and executes processing (command processing) according to the received command. The IC card 1 electrically transmits a response (process response) which is a result of execution of the command processing to the external device 2 through the contact portion 3. In addition, the IC card 1 is used for the settlement of a transaction, and can have, for example, a prepaid settlement function and a credit settlement function.

The prepaid settlement referred to here is, for example, a prepaid settlement in which settlement is performed by deduction from an amount paid in advance in the IC card 1. In addition, the credit settlement (credit transaction settlement) is, for example, a postpaid settlement in which settlement based on credit is performed by allowing the IC card 1 to function as a credit card.

The external device 2 is a device that communicates with the IC card 1, and is, for example, a reader/writer device, a terminal device including the reader/writer device, or the like. In addition, the external device 2 can be connected to the high-level server 9 through a network NW1. The external device 2 is, for example, a point-of-sale (POS) terminal device capable of supporting prepaid settlement and credit settlement by the IC card 1.

The high-level server 9 is a server device that can be connected to the external device 2 through the network NW1. The high-level server 9 is, for example, an example of an IC card management server that manages the IC card 1. The high-level server 9 manages the IC card 1, and transmits, for example, a user's credit result required when the IC card 1 is used as a credit card to the external device 2.

The IC module 10 is a module which is provided with the contact portion 3 and the IC chip 100, and by which a transaction is performed in a form such as, for example, a chip on tape (COT) having a plurality of IC modules 10 disposed on a tape. Meanwhile, a single IC module 10 which is extracted and separated from a tape is sometimes referred to as a COT.

The contact portion 3 has terminals of various signals which are required for the IC card 1 to operate. Here, the terminals of various signals include a terminal which is supplied with a power supply voltage, a clock signal, a reset signal, or the like from the external device 2 and a serial data input and output terminal (an SIO terminal) for communicating with the external device 2.

The IC chip 100 is a large scale integration (LSI) such as, for example, a one-chip microprocessor.

Next, the hardware configuration of the IC card 1 of the present embodiment will be described with reference to Fig. 2.

Fig. 2 is a diagram illustrating a hardware configuration example of the IC card 1 of the present embodiment.

As shown in Fig. 2, the IC card 1 includes the IC module 10 provided with the contact portion 3 and the IC chip 100. The IC chip 100 includes a universal asynchronous receiver transmitter (UART) 4, a CPU 5, a read only memory (ROM) 6, a random access memory (RAM) 7, and an electrically erasable programmable ROM (EEPROM) 8. In addition, the components are connected to each other through an internal bus BS1.

The UART 4 performs serial data communication with the external device 2 through the above-described SIO terminal. The UART 4 outputs data (for example, 1 byte data), obtained by performing parallel conversion on a serial data signal received through the SIO terminal, to the internal bus BS1. In addition, the UART 4 performs serial conversion on data acquired through the internal bus BS1, and outputs the converted data to the external device 2 through the SIO terminal. The UART 4 receives, for example, a command from the external device 2 through the SIO terminal. In addition, the UART 4 transmits a response to the external device 2 through the SIO terminal.

The CPU 5 executes a program stored in the ROM 6 or the EEPROM 8, and performs various processes of the IC card 1. The CPU 5 executes, for example, command processing according to the command received by the UART 4 through the contact portion 3.

The ROM 6 is a non-volatile memory such as, for example, a mask ROM, and stores a program for executing various processes of the IC card 1 and data such as a command table.

The RAM 7 is a volatile memory such as, for example, a static RAM (SRAM), and temporarily stores data used when various processes of the IC card 1 are performed.

The EEPROM 8 is, for example, an electrically rewritable non-volatile memory. The EEPROM 8 stores various types of data used by the IC card 1. The EEPROM 8 stores, for example, information used in various services (applications) using the IC card 1.

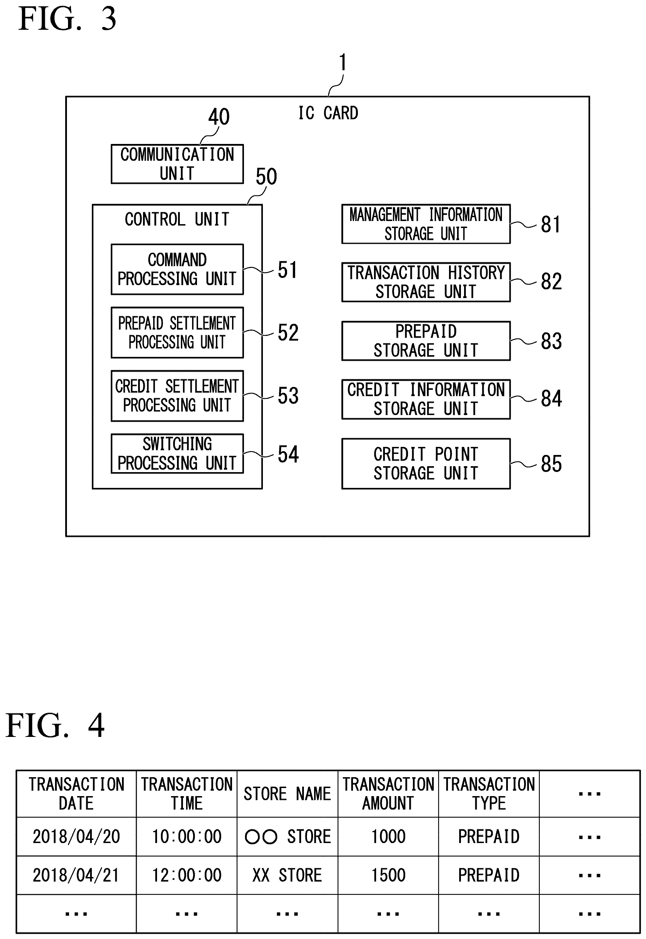

Next, a functional configuration example of the IC card 1 according to the present embodiment will be described with reference to Fig. 3.

Fig. 3 is a block diagram illustrating a functional configuration example of the IC card 1 of the present embodiment.

As shown in Fig. 3, the IC card 1 includes a communication unit 40, a control unit 50, a management information storage unit 81, a transaction history storage unit 82, a prepaid storage unit 83, a credit information storage unit 84, and credit points storage unit 85.

Here, each unit of the IC card 1 shown in Fig. 3 is realized using the hardware of the IC card 1 shown in Fig. 2.

The communication unit 40 is realized by, for example, programs stored in the UART 4, the CPU 5, and the ROM 6, and transmits and receives a command and a response to and from, for example, the external device 2 through the contact portion 3. That is, the communication unit 40 receives a command (a process request) for requesting a predetermined process from the external device 2, and transmits a response (a process response) to the command to the external device 2.

The management information storage unit 81 is, for example, a storage unit constituted by the EEPROM 8, and stores management information (for example, directory information) for managing various types of files in which data is stored. The management information storage unit 81 can validate or invalidate functions of prepaid settlement and credit settlement by, for example, performing a setting for validating or invalidating a data file relating to the prepaid settlement and the credit settlement.

The transaction history storage unit 82 is, for example, a storage unit constituted by the EEPROM 8, and stores history information of transactions such as the prepaid settlement and the credit settlement. Here, a data example of the transaction history storage unit 82 will be described with reference to Fig. 4.

Fig. 4 is a diagram illustrating a data example of the transaction history storage unit 82 of the present embodiment.

As shown in Fig. 4, the transaction history storage unit 82 stores a "transaction date," a "transaction time," a "store name," a "transaction amount," and a "transaction type" in association with each other. Here, the "transaction date" and the "transaction time" represent the date and time of the transaction, and the "store name" represents the store name of the transaction. In addition, the "transaction amount" represents the amount of the transaction, and the "transaction type" represents the type of transaction settlement such as, for example, "prepaid," "credit," or "charge (payment)."

The example shown in Fig. 4 indicates that the transaction of a "transaction amount" of "1000 yen" was performed at the "store name" of "oo store" at the "transaction time" of "10:00:00" on the "transaction date" of "2018/04/20," and the settlement was processed as "prepaid."

In this manner, the transaction history storage unit 82 stores transaction information such as the date and time or transaction amount of a transaction.

Returning to the description of Fig. 3, the prepaid storage unit 83 (an example of a first value information storage unit) is, for example, a storage unit constituted by the EEPROM 8, and stores a prepaid balance (first value information) corresponding to the remaining amount of an amount paid in advance. Meanwhile, the prepaid storage unit 83 may store information indicating points corresponding to the remaining amount instead of the prepaid balance.

The credit information storage unit 84 is, for example, a storage unit constituted by the EEPROM 8. The credit information storage unit 84 is, for example, a user's credit information for receiving a service of credit settlement, and stores the user's personal information or the like to be entered in an application form during contract. The credit information is information for examining a user's credit, and is personal information such as, for example, the user's name, address, birth date, age, sex, occupation, annual income, workplace information, or telephone number. In the present embodiment, the credit information is assumed to be stored in the credit information storage unit 84 in advance when the IC card 1 is issued.

The credit point storage unit 85 (an example of a second value information storage unit) is, for example, a storage unit constituted by the EEPROM 8, and stores credit points (second value information) capable of being used for credit settlement.

Meanwhile, in the present embodiment, since the prepaid settlement function is valid and the credit settlement function is in an invalid state at the beginning of issuance of the IC card, the credit information storage unit 84 and the credit point storage unit 85 are assumed to be invalidated by setting information of the management information storage unit 81. The wording "to be invalidated" used here indicates a state in which a storage area is secured in the EEPROM 8 but is set to be unusable from the outside of the IC card 1.

The control unit 50 is realized by, for example, the CPU 5, the RAM 7, the ROM 6, or the EEPROM 8, and integrally controls the IC card 1. The control unit 50 includes a command processing unit 51, a prepaid settlement processing unit 52, a credit settlement processing unit 53, and a switching processing unit 54.

The command processing unit 51 executes processing of various commands (command processing) in accordance with commands (process requests) transmitted from the external device 2 to the IC card 1. The command processing unit 51 executes command processing in accordance with, for example, a command received from the external device 2 through the communication unit 40. In addition, the command processing unit 51 transmits a response which is a result of command processing to the external device 2 through the communication unit 40.

The prepaid settlement processing unit 52 (an example of a transaction processing unit) executes a process of prepaid settlement. For example, in a case where the command processing unit 51 receives a command related to prepaid settlement, the prepaid settlement processing unit 52 executes a process according to the command relevant to prepaid settlement, and outputs a process result to the command processing unit 51. The prepaid settlement processing unit 52 performs a settlement by subtracting the prepaid balance stored by the prepaid storage unit 83 in accordance with, for example, the amount of a transaction.

The credit settlement processing unit 53 (an example of the transaction processing unit) executes a process of credit settlement. For example, in a case where the command processing unit 51 receives a command related to credit settlement, the credit settlement processing unit 53 executes a process according to the command relevant to credit settlement, and outputs a process result to the command processing unit 51. Meanwhile, since the credit examination of a user is not completed at the beginning of issuance of the IC card 1, the function of the credit settlement processing unit 53 (the function of credit settlement) is assumed to be invalidated by the setting of the management information storage unit 81 described above.

In a case where a predetermined condition based on information relating to a transaction is satisfied, the switching processing unit 54 converts the prepaid balance stored by the prepaid storage unit 83 into credit points, and stores the credit points in the credit point storage unit 85. In addition, the switching processing unit 54 validates the function of the credit settlement process, and invalidates the function of the prepaid settlement process.

Specifically, in a case where the predetermined condition is satisfied and information indicating that the user has passed the credit examination is acquired, the switching processing unit 54 validates the function of the credit settlement process, and invalidates the function of the prepaid settlement process. Meanwhile, in a case where the prepaid balance stored by the prepaid storage unit 83 is equal to or less than a predetermined value, for example, as the case where the predetermined condition is satisfied, the switching processing unit 54 validates the function of the credit settlement process, and invalidates the function of the prepaid settlement process. In addition, the switching processing unit 54 changes the setting information of the management information storage unit 81 described above to thereby validate the function of the credit settlement process and invalidate the function of the prepaid settlement process.

For example, it is assumed that the initial value of the prepaid balance stored by the prepaid storage unit 83 is "3000 (yen)" and that the predetermined value is "1000." In this case, in a case where "2000" or more is used by the transaction of the prepaid settlement process, the switching processing unit 54 validates the function of the credit settlement process, and invalidates the function of the prepaid settlement process. The predetermined value herein is set on the basis of, for example, the amount of the transaction of the prepaid settlement process assumed (expected) to be required for securing a period longer than a period required for the credit examination of the user.

Next, operations of the IC card 1 and the IC card system 150 according to the present embodiment will be described with reference to the accompanying drawings.

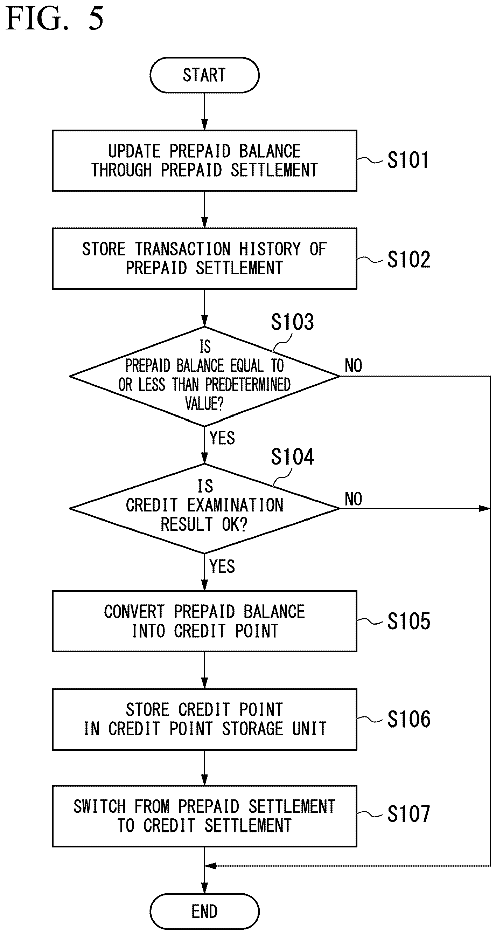

Fig. 5 is a flow chart illustrating an example of an operation of the IC card 1 of the present embodiment. In this drawing, a process of switching from the prepaid settlement function of the IC card 1 to the credit settlement function thereof will be described. In the IC card 1, for example, in a case where a transaction such as a user's purchase of a commodity occurs, the prepaid settlement process is executed by command processing transmitted from the external device 2.

As shown in Fig. 5, the IC card 1 first updates the prepaid balance by, for example, prepaid settlement (step S101). The prepaid settlement processing unit 52 of the IC card 1 reads out the prepaid balance stored by the prepaid storage unit 83, and stores a value obtained by subtracting a transaction amount from the prepaid balance as a new prepaid balance in the prepaid storage unit 83 again.

Next, the IC card 1 stores a transaction history of prepaid settlement (step S102). As shown in Fig. 4, the prepaid settlement processing unit 52 stores transaction history information of transactions on which prepaid settlement has been performed in the transaction history storage unit 82.

Next, the switching processing unit 54 of the IC card 1 determines whether the prepaid balance is equal to or less than a predetermined value (step S103). The switching processing unit 54 reads out the prepaid balance stored by the prepaid storage unit 83, and determines whether the prepaid balance is, for example, equal to or less than "1000." In a case where the prepaid balance is equal to or less than the predetermined value ("1000") (step S103: YES), the switching processing unit 54 advances the process to step S104. In addition, in a case where the prepaid balance is larger than the predetermined value ("1000") (step S103: NO), the switching processing unit 54 ends the switching process.

In step S104, the switching processing unit 54 determines whether a credit examination result is OK. The switching processing unit 54 causes, for example, the command processing unit 51 to transmit a response including a request for the credit examination result to the external device 2 and to acquire the credit examination result from the external device 2. The switching processing unit 54 determines whether the credit examination result acquired through the command processing unit 51 is OK. In a case where the credit examination result is OK (information indicating that the user has passed the credit examination is acquired) (step S104: YES), the switching processing unit 54 advances the process to step S105. In a case where the credit examination result is NG (information indicating that the user has not passed the credit examination is acquired) (step S104: NO), the switching processing unit 54 ends the switching process.

In step S105, the switching processing unit 54 converts the prepaid balance into credit points. The switching processing unit 54 reads out the prepaid balance stored by the prepaid storage unit 83, and converts the prepaid balance into credit points. Meanwhile, the switching processing unit 54 may convert the prepaid balance and the credit points at a conversion ratio of 1:1 (one-to-one), or may convert the prepaid balance into the credit points at a predetermined conversion ratio.

Next, the switching processing unit 54 stores the converted credit points in the credit point storage unit 85 (step S106).

Next, the switching processing unit 54 switches from prepaid settlement to credit settlement (step S107). The switching processing unit 54 changes the setting information stored by the management information storage unit 81 to thereby validate the function of the credit settlement process and invalidate the function of the prepaid settlement process. That is, the switching processing unit 54 validates setting information of a file relevant to credit settlement stored by the management information storage unit 81, and invalidates setting information of a file relevant to prepaid settlement. The switching processing unit 54 ends the switching process after the process of step S107.

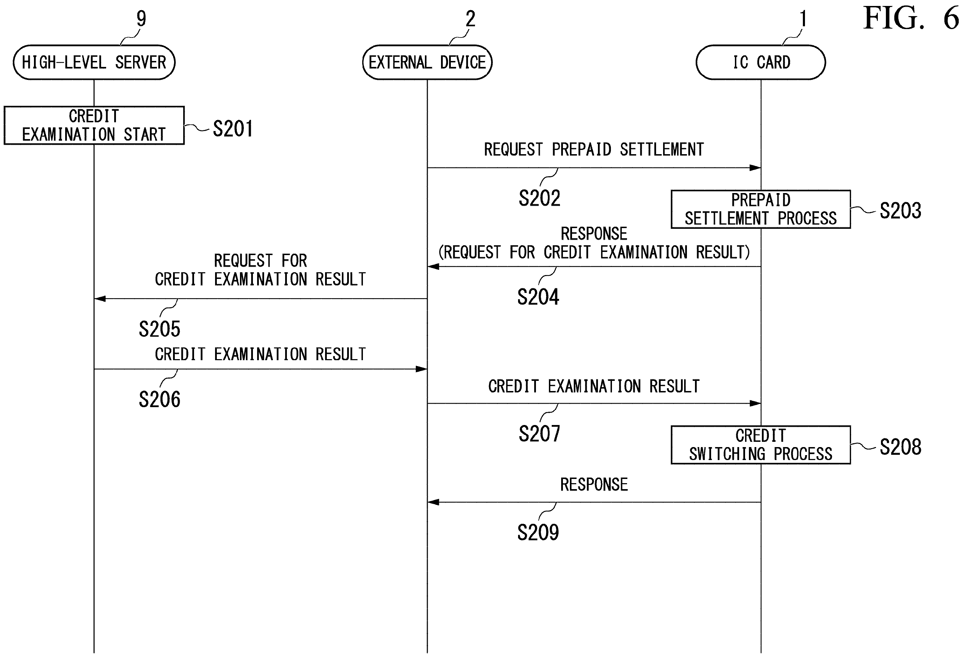

Next, the entire operation of the IC card system 150 of the present embodiment will be described with reference to Fig. 6.

Fig. 6 is a diagram illustrating an example of an operation of the IC card system 150 of the present embodiment. In this drawing, a process of switching from the prepaid settlement function of the IC card 1 to the credit settlement function thereof in the IC card system 150 will be described.

As shown in Fig. 6, the high-level server 9 first starts a credit examination during issuance of the IC card 1 (step S201).

Next, in a case where a transaction such as a user's purchase of a commodity occurs, the external device 2 transmits a request for prepaid settlement to the IC card 1 (step S202). The external device 2 transmits the request for prepaid settlement to the IC card 1 through a command.

Next, the IC card 1 executes the prepaid settlement process (step S203). Here, as a case where a predetermined condition is satisfied by the switching processing unit 54 of the IC card 1, an example of a case where the prepaid balance stored by the prepaid storage unit 83 is equal to or less than a predetermined value will be described.

Next, the IC card 1 transmits a response including the request for the credit examination result to the external device 2 (step S204).

Next, the external device 2 transmits the request for the credit examination result to the high-level server 9 (step S205). That is, the external device 2 transmits the request for the credit examination result to the high-level server 9 through the network NW1.

Next, the high-level server 9 transmits the credit examination result to the external device 2 in accordance with the request for the credit examination result (step S206). Meanwhile, here, the credit examination result will be described as being OK (the user having passed the credit examination).

Next, the external device 2 transmits the credit examination result to the IC card 1 through a command (step S207).

Next, the IC card 1 executes a process of switching to credit (step S208). That is, the switching processing unit 54 of the IC card 1 executes the processes of steps S105 to S 107 shown in Fig. 5 described above to thereby validate the function of the credit settlement process and invalidate the function of the prepaid settlement process.

Next, the IC card 1 transmits a response indicating the completion of switching to the external device 2 (step S209).

Thereby, in the IC card 1, the function of the credit settlement process is validated, and credit settlement can be used from the next transaction.

As described above, the IC card 1 (the portable electronic device) according to the present embodiment includes the prepaid storage unit 83 (the first value information storage unit), the credit point storage unit 85 (the second value information storage unit), the prepaid settlement processing unit 52 (the transaction processing unit), and the switching processing unit 54. The prepaid storage unit 83 stores a prepaid balance (first value information) corresponding to the remaining amount of an amount paid in advance. The credit point storage unit 85 stores credit points (second value information) capable of being used in credit settlement. The prepaid settlement processing unit 52 performs the prepaid settlement process of performing a settlement by subtracting the prepaid balance stored by the prepaid storage unit 83 in accordance with the amount of a transaction. In a case where a predetermined condition based on information relating to a transaction is satisfied, the switching processing unit 54 converts the prepaid balance stored by the prepaid storage unit 83 into credit points, and stores the credit points in the credit point storage unit 85. The switching processing unit 54 validates the function of the credit settlement process, and invalidates the function of the prepaid settlement process.

Thereby, the IC card 1 according to the present embodiment can be used as a prepaid card, for example, before the credit examination of the user is completed. In addition, the IC card 1 according to the present embodiment is switched from a prepaid card to a credit card, for example, in a case where a predetermined condition in which the completion of a credit examination is assumed is satisfied, and credit settlement becomes possible. Therefore, in the IC card 1 according to the present embodiment, it is possible to effectively use the processing period of the credit examination, and to improve its convenience.

In addition, generally, a credit card can be used in a wider range of situations than a prepaid card. Since the IC card 1 according to the present embodiment is automatically switched to a credit card while being used as a prepaid card, the IC card can be used in a wide range of settlement processes, and its convenience can be further improved.

In addition, in the present embodiment, in a case where the prepaid balance stored by the prepaid storage unit 83 is equal to or less than a predetermined value as the case where the predetermined condition is satisfied, the switching processing unit 54 validates the function of the credit settlement process, and invalidates the function of the prepaid settlement process.

Thereby, the IC card 1 according to the present embodiment can be switched to a credit card while the function of the prepaid settlement process is used.

In addition, in the present embodiment, in a case where a predetermined condition is satisfied and information indicating that the user has passed the credit examination is acquired, the switching processing unit 54 validates the function of the credit settlement process, and invalidates the function of the prepaid settlement process.

Thereby, in the IC card 1 according to the present embodiment, it is confirmed that the user has passed the credit examination while the function of the prepaid settlement process is used, and then it is possible to appropriately switch from a prepaid card to a credit card.

In addition, the IC card 1 according to the present embodiment includes the IC module 10 and a card substrate (a PT card body) having the IC module 10 embedded therein. The IC module 10 according to the present embodiment includes the prepaid storage unit 83, the credit point storage unit 85, the prepaid settlement processing unit 52, and the switching processing unit 54 described above.

Thereby, the IC module 10 according to the present embodiment exhibits the same effect as the above-described IC card 1, and thus it is possible to effectively use the processing period of the credit examination, and to improve its convenience.

In addition, the IC card system 150 according to the present embodiment includes the IC card 1, the external device 2, and the high-level server 9 described above. The external device 2 transmits the credit examination result acquired from the high-level server 9 to the IC card 1. In a case where a predetermined condition is satisfied and information indicating that the user has passed the credit examination is acquired, the IC card 1 validates the function of the credit settlement process, and invalidates the function of the prepaid settlement process.

Thereby, the IC card system 150 according to the present embodiment exhibits the same effect as the above-described IC card 1, and thus it is possible to effectively use the processing period of the credit examination, and to improve its convenience.

### (Second embodiment)

Next, an IC card la according to a second embodiment will be described with reference to the accompanying drawings.

In the above-described first embodiment, a description has been given of an example in which a credit examination is started during issuance of the IC card, and the credit information is stored in the IC card 1 in advance, whereas, in the present embodiment, a description will be given of an example in which the credit information is stored in the IC card la later, and the credit examination is started.

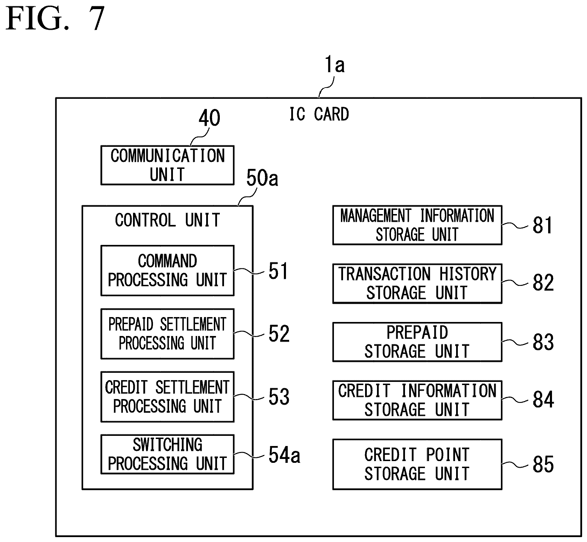

Fig. 7 is a block diagram illustrating a functional configuration example of the IC card la of the present embodiment. Meanwhile, the outward appearance of the IC card la of the present embodiment, the configuration example of the IC card system 150, and the hardware configuration example of the IC card la of the present embodiment are the same as those of the first embodiment shown in Figs. 1 and 2, and thus the description thereof will not be given.

As shown in Fig. 7, the IC card la includes the communication unit 40, a control unit 50a, the management information storage unit 81, the transaction history storage unit 82, the prepaid storage unit 83, the credit information storage unit 84, and the credit point storage unit 85.

Here, each unit of the IC card la shown in Fig. 7 is realized using the hardware shown in Fig. 2. In addition, in this drawing, the same components as the components shown in Fig. 3 are denoted by the same reference numerals and signs, and the description thereof will not be given.

The control unit 50a is realized by, for example, the CPU 5, the RAM 7, the ROM 6, or the EEPROM 8, and integrally controls the IC card la. The control unit 50a includes the command processing unit 51, the prepaid settlement processing unit 52, the credit settlement processing unit 53, and a switching processing unit 54a.

In a case where a predetermined condition based on information relating to a transaction is satisfied, the switching processing unit 54a causes the command processing unit 51 to acquire the credit information from the external device 2, and stores the acquired credit information in the credit information storage unit 84. The switching processing unit 54a converts the prepaid balance stored by the prepaid storage unit 83 into credit points, and stores the credit points in the credit point storage unit 85. In addition, the switching processing unit 54a validates the function of the credit settlement process, and invalidates the function of the prepaid settlement process.

In addition, the switching processing unit 54a determines whether information indicating that the user has passed the credit examination is acquired during the settlement process of the next transaction. In a case where the information indicating that the user has passed the credit examination is acquired, the switching processing unit 54a stores, for example, setting information indicating that the user has passed the credit examination in the management information storage unit 81.

Meanwhile, the command processing unit 51 according to the present embodiment confirms the setting information of the management information storage unit 81 in a case where a command related to credit settlement is received, and causes the credit settlement processing unit 53 to execute the credit settlement process in a case where the user has passed the credit examination.

Next, operations of the IC card la and the IC card system 150 according to the present embodiment will be described with reference to the accompanying drawings.

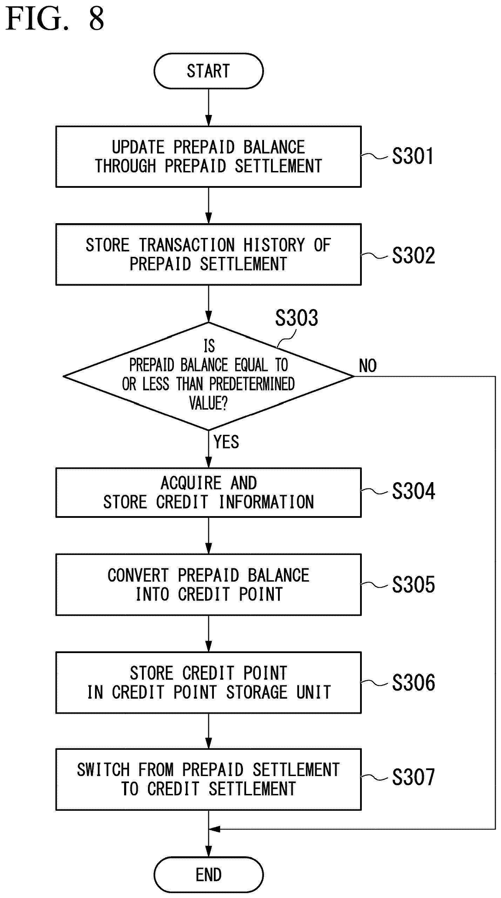

Fig. 8 is a first flow chart illustrating an example of an operation of the IC card la of the present embodiment. In this drawing, a process of switching from the prepaid settlement function of the IC card la to the credit settlement function thereof will be described. In the IC card la, for example, in a case where a transaction such as a user's purchase of a commodity occurs, the prepaid settlement process is executed by command processing transmitted from the external device 2.

In Fig. 8, the processes of steps S301 to S303 are the same as the processes of steps S101 to S103 shown in Fig. 5 described above, and thus the description thereof will not be given.

In step S304, the IC card la acquires and stores the credit information. The switching processing unit 54a of the IC card la causes the command processing unit 51 to acquire the credit information from the external device 2, and stores the acquired credit information in the credit information storage unit 84.

The following processes of steps S305 to S307 are the same as the processes of steps S105 to S107 shown in Fig. 5 described above, and thus the description thereof will not be given.

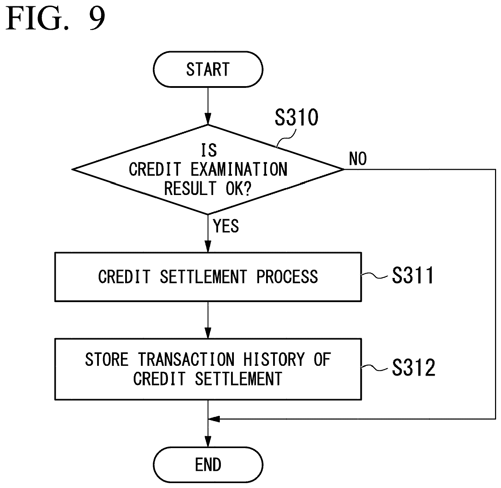

In addition, Fig. 9 is a second flow chart illustrating an example of the operation of the IC card la of the present embodiment. In this drawing, a case where the switching process shown in Fig. 8 described above is executed and then a transaction process is executed (a case where the settlement process of the next transaction is performed) will be described.

As shown in Fig. 9, the IC card la first determines whether the credit examination result is OK (step S310). The switching processing unit 54a of the IC card la causes, for example, the command processing unit 51 to transmit a response including a request for the credit examination result to the external device 2 and to acquire the credit examination result from the external device 2. The switching processing unit 54a determines whether the credit examination result acquired through the command processing unit 51 is OK. In a case where the credit examination result is OK (information indicating that the user has passed the credit examination is acquired) (step S310: YES), the switching processing unit 54a advances the process to step S311. In a case where the credit examination result is NG (information indicating that the user has not passed the credit examination is acquired) (step S310: NO), the switching processing unit 54a ends the switching process.

In step S311, the IC card la executes the credit settlement process. The credit settlement processing unit 53 of the IC card la executes the credit settlement process corresponding to a transaction. In addition, the switching processing unit 54a stores setting information indicating that the user has passed the credit examination in the management information storage unit 81.

Next, the credit settlement processing unit 53 stores a transaction history of credit settlement in the transaction history storage unit 82 (step S312). After the process of step S312, the credit settlement processing unit 53 ends the process.

Meanwhile, in the second and subsequent processes in which the information indicating that the user has not passed the credit examination is acquired, the command processing unit 51 confirms the setting information of the management information storage unit 81 in accordance with a command related to credit settlement, and causes the credit settlement processing unit 53 to execute the credit settlement process in a case where the user has passed the credit examination.

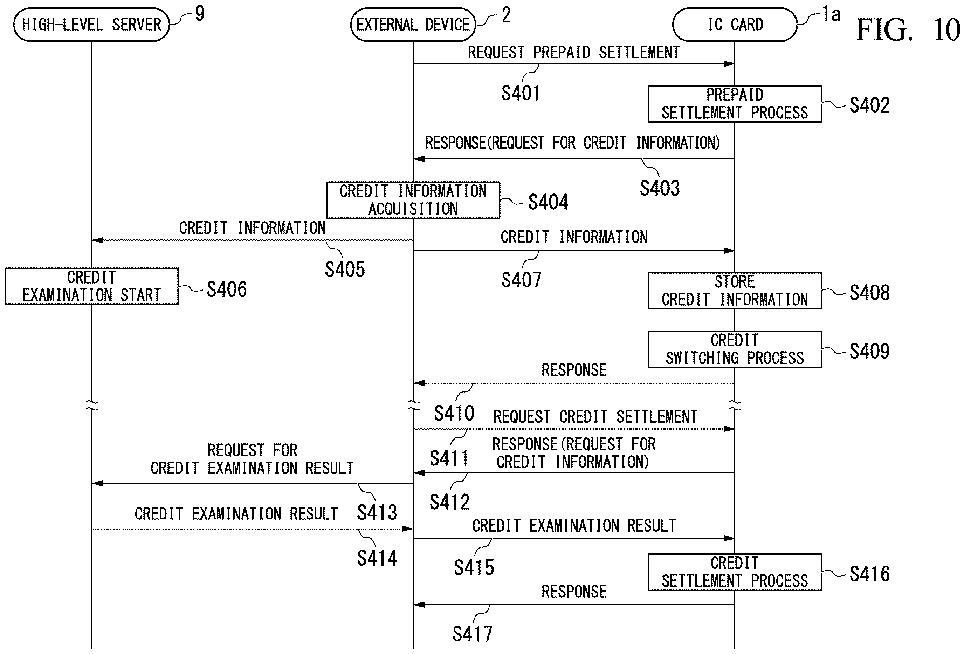

Next, the entire operation of the IC card system 150 of the present embodiment will be described with reference to Fig. 10.

Fig. 10 is a diagram illustrating an example of an operation of the IC card system 150 of the present embodiment. In this drawing, a process of switching from the prepaid settlement function of the IC card la to the credit settlement function thereof in the IC card system 150 will be described.

As shown in Fig. 10, in a case where a transaction such as a user's purchase of a commodity occurs, the external device 2 first transmits a request for prepaid settlement to the IC card la (step S401). The external device 2 transmits the request for prepaid settlement to the IC card la through a command.

Next, the IC card la executes the prepaid settlement process (step S402). Here, as a case where a predetermined condition is satisfied by the switching processing unit 54a of the IC card la, a description will be given of an example of a case where the prepaid balance stored by the prepaid storage unit 83 is equal to or less than a predetermined value.

Next, the IC card la transmits a response including credit information request to the external device 2 (step S403).

Next, the external device 2 acquires the credit information (step S404). The external device 2 causes, for example, a user to input the credit information, and acquires the credit information.

Next, the external device 2 transmits the credit information to the high-level server 9 (step S405). That is, the external device 2 transmits the credit information to the high-level server 9 through the network NW1.

Next, the high-level server 9 starts a credit examination in accordance with the credit information (step S406).

Next, the external device 2 transmits the credit information to the IC card la through a command (step S407).

Next, the IC card la stores the credit information (step S408). The switching processing unit 54a of the IC card 1a stores the acquired credit information in the credit information storage unit 84.

Next, the IC card la executes process of switching to credit (step S409). That is, the switching processing unit 54a executes the processes of steps S305 to S307 shown in Fig. 8 described above to validate the function of the credit settlement process and invalidate the function of the prepaid settlement process.

Next, the IC card la transmits a response indicating the completion of switching to the external device 2 (step S410).

In the next transaction, the external device 2 transmits a request for credit settlement to the IC card la (step S411). The external device 2 transmits the request for credit settlement to the IC card la through a command.

Next, the IC card la transmits a response including the request for the credit examination result to the external device 2 (step S412).

Next, the external device 2 transmits the request for the credit examination result to the high-level server 9 (step S413). That is, the external device 2 transmits the request for the credit examination result to the high-level server 9 through the network NW1.

Next, the high-level server 9 transmits the credit examination result to the external device 2 in accordance with the request for the credit examination result (step S414). Meanwhile, here, the credit examination result will be described as being OK (the user having passed the credit examination).

Next, the external device 2 transmits the credit examination result to the IC card la through a command (step S415).

Next, the IC card la executes the credit settlement process (step S416).

Next, the IC card la transmits a response including a result of execution of the credit settlement process to the external device 2 (step S417).

Meanwhile, in the third and subsequent transactions in which the user has already passed the credit examination, the IC card la does not execute the transmission of a response including the request for the credit examination result in step S412 described above, and executes the credit settlement process in step S416 described above. That is, in the third and subsequent transactions in which the user has already passed the credit examination, the processes of steps S412 to S415 described above are not executed.

As described above, the IC card la according to the present embodiment includes the prepaid storage unit 83 (the first value information storage unit), the credit point storage unit 85 (the second value information storage unit), the prepaid settlement processing unit 52 (the transaction processing unit), and the switching processing unit 54a. In a case where a predetermined condition based on information relating to a transaction is satisfied, the switching processing unit 54a converts the prepaid balance stored by the prepaid storage unit 83 into credit points, and stores the credit points in the credit point storage unit 85. The switching processing unit 54a validates the function of the credit settlement process, and invalidates the function of the prepaid settlement process.

Thereby, in the IC card la according to the present embodiment, since the processing period of the credit examination can be effectively used, the IC card exhibits the same effect as the above-described first embodiment, and it is possible to improve its convenience.

In addition, in the present embodiment, in a case where a predetermined condition based on information relating to a transaction is satisfied, the switching processing unit 54a causes the command processing unit 51 to acquire the credit information from the external device 2, and stores the acquired credit information in the credit information storage unit 84.

Thereby, in the IC card la according to the present embodiment, since a prepaid card that does not hold the credit information can be appropriately switched to a credit card, it is possible to improve its convenience.

### (Third embodiment)

Next, an IC card 1b of a third embodiment will be described with reference to the accompanying drawings.

In the present embodiment, a modification example in which, as a predetermined condition, the number of transactions is used instead of the prepaid balance stored by the prepaid storage unit 83 will be described.

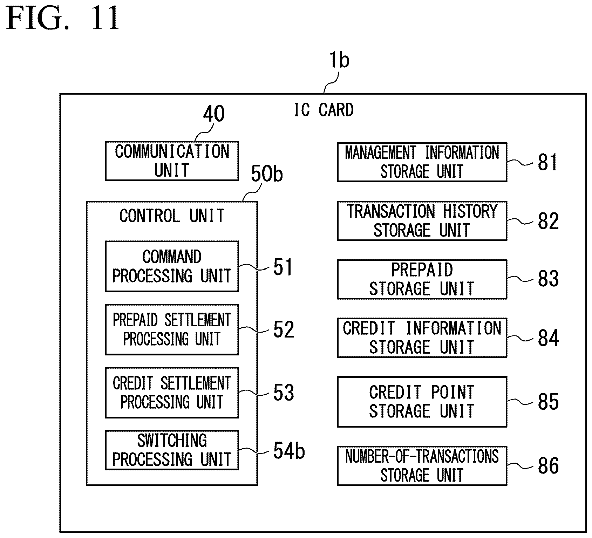

Fig. 11 is a block diagram illustrating a functional configuration example of the IC card 1b of the present embodiment. Meanwhile, the outward appearance of the IC card 1b of the present embodiment, the configuration example of the IC card system 150, and the hardware configuration example of the IC card 1b of the present embodiment are the same as those of the first embodiment shown in Figs. 1 and 2, and thus the description thereof will not be given.

As shown in Fig. 11, the IC card 1b includes the communication unit 40, a control unit 50b, the management information storage unit 81, the transaction history storage unit 82, the prepaid storage unit 83, the credit information storage unit 84, the credit point storage unit 85, and a number-of-transactions storage unit 86.

Here, each unit of the IC card 1b shown in Fig. 11 is realized using the hardware shown in Fig. 2. In addition, in this drawing, the same components as the components shown in Fig. 3 are denoted by the same reference numerals and signs, and the description thereof will not be given.

The number-of-transactions storage unit 86 is, for example, a storage unit constituted by the EEPROM 8, and stores the number of transactions using prepaid settlement. The number-of-transactions storage unit 86 is updated by the addition of "1," for example, every time the prepaid settlement process is executed by the prepaid settlement processing unit 52.

The control unit 50b is realized by, for example, the CPU 5, the RAM 7, the ROM 6, or the EEPROM 8, and integrally controls the IC card 1b. The control unit 50b includes the command processing unit 51, the prepaid settlement processing unit 52, the credit settlement processing unit 53, and a switching processing unit 54b.

In a case where a predetermined condition is satisfied and information indicating that the user has passed the credit examination is acquired, the switching processing unit 54b validates the function of the credit settlement process, and invalidates the function of the prepaid settlement process. The basic function of the switching processing unit 54b is the same as the switching processing unit 54 of the first embodiment. In a case where the number of transactions using the prepaid settlement process reaches a predetermined number of times, for example, as a case where a predetermined condition is satisfied, the switching processing unit 54b validates the function of the credit settlement process, and invalidates the function of the prepaid settlement process. In addition, the switching processing unit 54b changes the setting information of the management information storage unit 81 described above to thereby validate the function of the credit settlement process and invalidate the function of the prepaid settlement process.

For example, in a case where the transaction of the prepaid settlement process is performed ten or more times, the switching processing unit 54b validates the function of the credit settlement process, and invalidates the function of the prepaid settlement process. Specifically, the switching processing unit 54b reads out the number of transactions from the number-of-transactions storage unit 86, and determines whether the number of transactions reaches ten. A predetermined number of times (ten times) herein is, for example, a value of the number of transactions of the prepaid settlement process assumed (expected) to be required for securing a period longer than a period required for the credit examination of the user.

Next, an operation of the IC card 1b according to the present embodiment will be described with reference to the accompanying drawings.

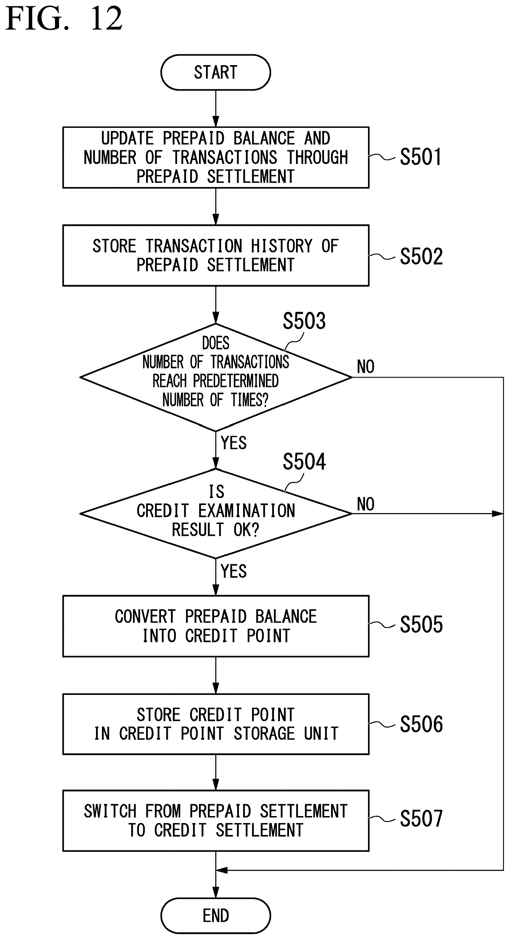

Fig. 12 is a flow chart illustrating an example of an operation of the IC card 1b of the present embodiment. In this drawing, a process of switching from a prepaid settlement function of the IC card 1b to a credit settlement function thereof will be described. In the IC card 1b, for example, in a case where a transaction such as a user's purchase of a commodity occurs, the prepaid settlement process is executed by command processing transmitted from the external device 2.

In Fig. 12, the processes of steps S501 and S502 are the same as the processes of steps S101 and S102 shown in Fig. 5 described above, and thus the description thereof will not be given.

In step S503, the switching processing unit 54b of the IC card 1b determines whether the number of transactions reaches a predetermined number of times. The switching processing unit 54b reads out the number of transactions stored by the number-of-transactions storage unit 86, and determines whether the number of transactions is, for example, ten or more. In a case where the number of transactions reaches the predetermined number of times (ten times) (step S503: YES), the switching processing unit 54b advances the process to step S504. In addition, in a case where the number of transactions is less than the predetermined number of times (ten times) (step S503: NO), the switching processing unit 54b ends the switching process.

The following processes of steps S504 to S507 are the same as the processes of steps S104 to S107 shown in Fig. 5 described above, and thus the description thereof will not be given.

Meanwhile, in the above-described example of the present embodiment, although a description has been given of an example in which the IC card 1b includes the number-of-transactions storage unit 86, and the switching processing unit 54b acquires the number of transactions stored by the number-of-transactions storage unit 86, there is no limitation thereto, and the number of transactions may be calculated on the basis of the transaction history stored by the transaction history storage unit 82.

As described above, in the IC card 1b of the present embodiment, in a case where the number of transactions using the prepaid settlement process reaches a predetermined number of times as a case where a predetermined condition is satisfied, the switching processing unit 54b validates the function of the credit settlement process, and invalidates the function of the prepaid settlement process.

Thereby, the IC card 1b according to the present embodiment can be switched to a credit card while the function of the prepaid settlement process is used. Thus, in the IC card 1b according to the present embodiment, it is possible to effectively use the processing period of the credit examination, and to improve its convenience.

### (Fourth embodiment)

Next, an IC card 1c according to a fourth embodiment will be described with reference to the accompanying drawings.

In the present embodiment, a modification example in which, as a predetermined condition, an elapsed time is used instead of the prepaid balance stored by the prepaid storage unit 83 will be described.

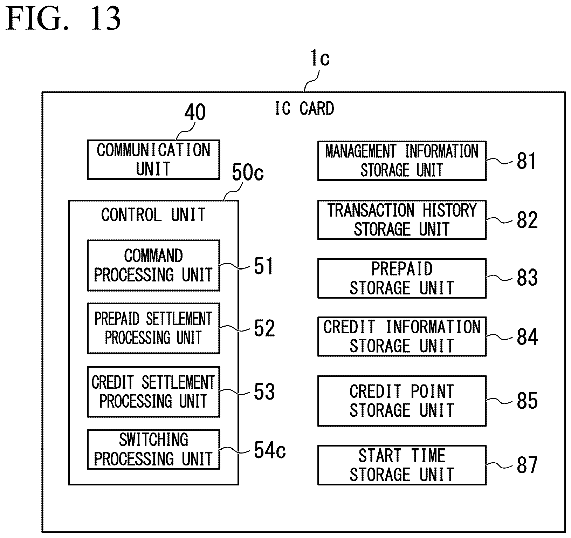

Fig. 13 is a block diagram illustrating a functional configuration example of the IC card 1c of the present embodiment. Meanwhile, the outward appearance of the IC card 1c of the present embodiment, the configuration example of the IC card system 150, and the hardware configuration example of the IC card 1c of the present embodiment are the same as those of the first embodiment shown in Figs. 1 and 2, and thus the description thereof will not be given.

As shown in Fig. 13, the IC card 1c includes the communication unit 40, a control unit 50c, the management information storage unit 81, the transaction history storage unit 82, the prepaid storage unit 83, the credit information storage unit 84, the credit point storage unit 85, and a start time storage unit 87.

Here, each unit of the IC card 1c shown in Fig. 13 is realized using the hardware shown in Fig. 2. In addition, in this drawing, the same components as the components shown in Fig. 3 are denoted by the same reference numerals and signs, and the description thereof will not be given.

The start time storage unit 87 is, for example, a storage unit constituted by the EEPROM 8, and stores a start time indicating a reference time serving as a reference. The start time storage unit 87 stores information indicating a time at which a credit examination is started or information indicating a time at which a transaction using prepaid settlement is initially executed, for example, as the start time. Meanwhile, the start time may include date information. In addition, the start time at which a credit examination is started is, for example, time information (including date information) at which the IC card 1c is issued. In a case where the start time is information indicating a time at which a transaction using prepaid settlement is initially executed, the start time storage unit 87 stores, for example, transaction time information included in transaction information in which the prepaid settlement process is initially executed by the prepaid settlement processing unit 52.

The control unit 50c is realized by, for example, the CPU 5, the RAM 7, the ROM 6, or the EEPROM 8, and integrally controls the IC card 1c. The control unit 50c includes the command processing unit 51, the prepaid settlement processing unit 52, the credit settlement processing unit 53, and a switching processing unit 54c.

In a case where a predetermined condition is satisfied and information indicating that the user has passed the credit examination is acquired, the switching processing unit 54c validates the function of the credit settlement process, and invalidates the function of the prepaid settlement process. The basic function of the switching processing unit 54c is the same as the switching processing unit 54 of the first embodiment. In a case where a predetermined period of time or more has elapsed since a reference time serving as a reference (start time), for example, as a case where a predetermined condition is satisfied, the switching processing unit 54c validates the function of the credit settlement process, and invalidates the function of the prepaid settlement process. In addition, the switching processing unit 54c changes the setting information of the management information storage unit 81 described above to thereby validate the function of the credit settlement process and invalidate the function of the prepaid settlement process.

For example, in a case where a transaction time in the prepaid settlement process has passed a predetermined period of time (such as, for example, two hours) or more since the start time stored by the start time storage unit 87, the switching processing unit 54c validates the function of the credit settlement process, and invalidates the function of the prepaid settlement process. Specifically, the switching processing unit 54c reads out the start time from the start time storage unit 87, and determines whether a value obtained by subtracting the start time read out from the transaction time in the current prepaid settlement process is two hours or more. The predetermined period of time (two hours) referred to here is, for example, a time equivalent to a period longer than a period required for the credit examination of the user.

Next, an operation of the IC card 1c according to the present embodiment will be described with reference to the accompanying drawings.

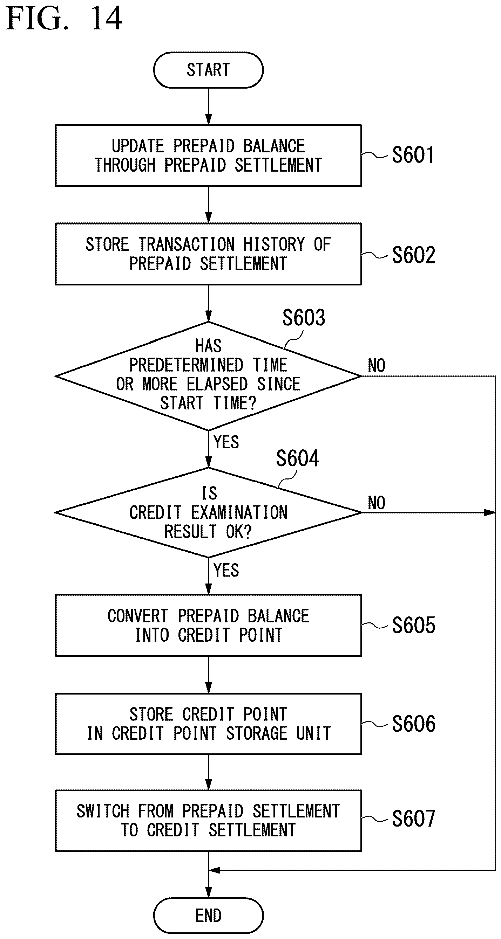

Fig. 14 is a flow chart illustrating an example of an operation of the IC card 1c of the present embodiment. In this drawing, a process of switching from a prepaid settlement function of the IC card 1c to a credit settlement function thereof will be described. In the IC card 1c, for example, in a case where a transaction such as a user's purchase of a commodity occurs, the prepaid settlement process is executed by command processing transmitted from the external device 2.

In Fig. 14, the processes of steps S601 and S602 are the same as the processes of steps S101 and S102 shown in Fig. 5 described above, and thus the description thereof will not be given.

In step S603, the switching processing unit 54c of the IC card 1c determines whether a predetermined period of time or more has elapsed since the start time. The switching processing unit 54c reads out the start time stored by the start time storage unit 87, and determines whether the current time has passed, for example, two hours or more since the start time. Meanwhile, the switching processing unit 54c acquires the current time as the transaction time of the current prepaid settlement. In a case where a predetermined period of time (two hours) or more has elapsed since the start time (step S603: YES), the switching processing unit 54c advances the process to step S604. In addition, in a case where the predetermined period of time (two hours) or more has not elapsed since the start time (step S603: NO), the switching processing unit 54c ends the switching process.

The following processes of steps S604 to S607 are the same as the processes of steps S104 to S107 shown in Fig. 5 described above, and thus the description thereof will not be given.

As shown in described, in the IC card 1c according to the present embodiment, in a case where a predetermined period of time or more has elapsed since the reference time serving as a reference (start time) as a case where a predetermined condition is satisfied, the switching processing unit 54c validates the function of the credit settlement process, and invalidates the function of the prepaid settlement process.

Thereby, the IC card 1c according to the present embodiment can be switched to a credit card while the function of the prepaid settlement process is used. Thus, in the IC card 1c according to the present embodiment, it is possible to effectively use the processing period of the credit examination, and to improve its convenience.

Meanwhile, in the present embodiment described above, although an example in which the transaction time of prepaid settlement is used at the current time has been described, there is no limitation thereto, and in a case where the IC card 1c has a battery and a clock function, the switching processing unit 54c may acquire the current time using the clock function.

### (Fifth embodiment)

Next, an IC card 1d according to a fifth embodiment will be described with reference to the accompanying drawings.

In the present embodiment, a description will be given of a modification example in which, when a prepaid balance is a negative value during switching from prepaid settlement to credit settlement, the amount of the negative value is processed using the credit settlement.

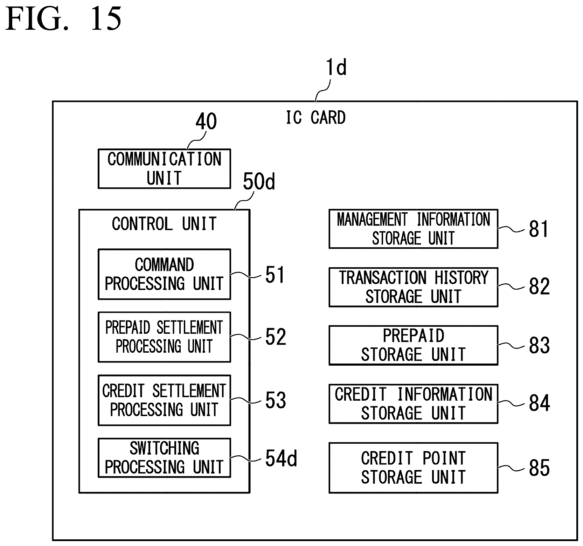

Fig. 15 is a block diagram illustrating a functional configuration example of the IC card 1d of the present embodiment. Meanwhile, the outward appearance of the IC card 1d of the present embodiment, the configuration example of the IC card system 150, and the hardware configuration example of the IC card 1d of the present embodiment are the same as those of the first embodiment shown in Figs. 1 and 2, and thus the description thereof will not be given.

As shown in Fig. 15, the IC card 1d includes the communication unit 40, a control unit 50d, the management information storage unit 81, the transaction history storage unit 82, the prepaid storage unit 83, the credit information storage unit 84, and the credit point storage unit 85.

Here, each unit of the IC card 1d shown in Fig. 15 is realized using the hardware shown in Fig. 2. In addition, in this drawing, the same components as the components shown in Fig. 3 are denoted by the same reference numerals and signs, and the description thereof will not be given.

The control unit 50d is realized by, for example, the CPU 5, the RAM 7, the ROM 6, or the EEPROM 8, and integrally controls the IC card Id. The control unit 50d includes the command processing unit 51, the prepaid settlement processing unit 52, the credit settlement processing unit 53, and a switching processing unit 54d.

In a case where a predetermined condition is satisfied and information indicating that the user has passed the credit examination is acquired, the switching processing unit 54d validates the function of the credit settlement process, and invalidates the function of the prepaid settlement process. The basic function of the switching processing unit 54d is the same as the switching processing unit 54 of the first embodiment.

In a case where a prepaid balance is a negative value, for example, when the prepaid balance is converted into credit points, the switching processing unit 54d performs a settlement process an amount corresponding to the negative value through the credit settlement process. The switching processing unit 54d reads out, for example, the prepaid balance from the prepaid storage unit 83, and determines whether the prepaid balance is a negative value (the prepaid balance <0). In a case where the prepaid balance is a negative value (the prepaid balance <0), the switching processing unit 54d causes the credit settlement processing unit 53 to perform the credit settlement process on an amount corresponding to the negative value.

Next, an operation of the IC card 1d according to the present embodiment will be described with reference to the accompanying drawings.

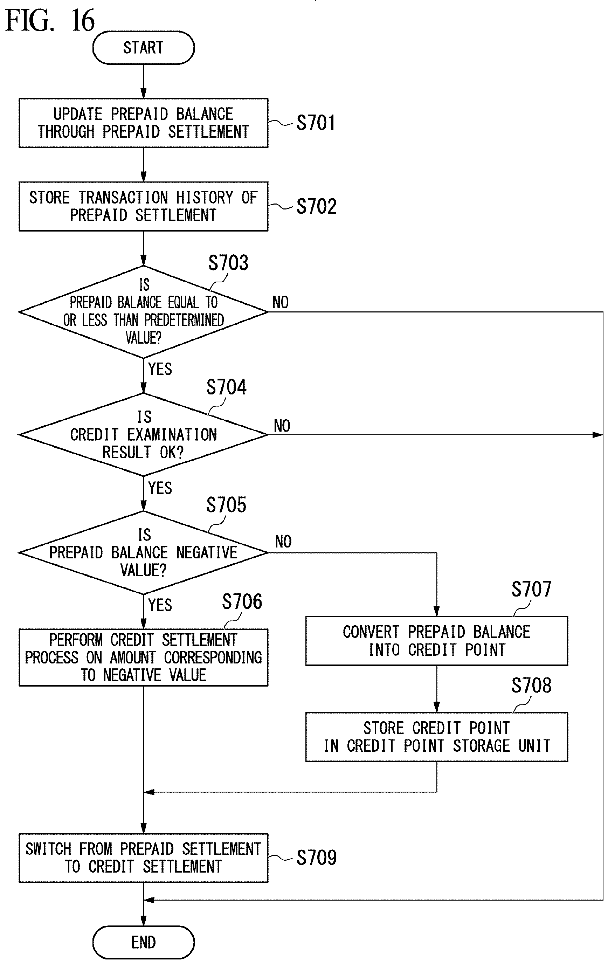

Fig. 16 is a flow chart illustrating an example of an operation of the IC card 1d of the present embodiment. In this drawing, a process of switching from a prepaid settlement function of the IC card 1d to a credit settlement function thereof will be described. In the IC card Id, for example, in a case where a transaction such as a user's purchase of a commodity occurs, the prepaid settlement process is executed by command processing transmitted from the external device 2.

In Fig. 16, the processes of steps S701 and S704 are the same as the processes of steps S101 and S104 shown in Fig. 5 described above, and thus the description thereof will not be given.

In step S705, the switching processing unit 54d of the IC card 1d determines whether the prepaid balance is a negative value. The switching processing unit 54d reads out the prepaid balance from the prepaid storage unit 83, and determines whether the prepaid balance is a negative value. In a case where the prepaid balance is a negative value (step S705: YES), the switching processing unit 54d advances the process to step S706. In addition, in a case where the prepaid balance is not a negative value (step S705: NO), the switching processing unit 54d advances the process to step S707.

In step S706, the switching processing unit 54d performs the credit settlement process on an amount corresponding to the negative value. That is, the switching processing unit 54d causes the credit settlement processing unit 53 to perform the credit settlement process on the amount corresponding to the negative value. After the process of step S706, the process proceeds to step S709.

In addition, the processes of steps S707 to S709 are the same as the processes of steps S105 to S107 shown in Fig. 5 described above, and thus the description thereof will not be given.

As described above, in the IC card 1d according to the present embodiment, in a case where the prepaid balance is a negative value when the prepaid balance is converted into credit points, the switching processing unit 54d performs a settlement process on an amount corresponding to the negative value through the credit settlement process.

Thereby, in the IC card 1d according to the present embodiment, it is possible to transfer a debt amount of the prepaid settlement process to credit settlement. Thus, in the IC card 1d according to the present embodiment, it is possible to further improve its convenience.

Meanwhile, in the present embodiment described above, a description has been given of an example of transfer to credit settlement in a case where the prepaid balance is a negative value, but the entire amount used in prepaid settlement until switching to credit settlement may be transferred to credit settlement without performing initial payment of the prepaid balance on the premise of switching to credit settlement. In this case, the switching processing unit 54d may calculate the entire amount used in prepaid settlement from the history information of transactions stored by the transaction history storage unit 82, or a transaction amount storage unit that stores the entire amount of transactions may be provided to acquire it from the transaction amount storage unit. That is, when the prepaid balance is converted into credit points, the switching processing unit 54d performs a settlement process on an amount corresponding to the initial value of the prepaid balance which is set during nonuse through the credit settlement process.

Thereby, in the IC card 1d according to the present embodiment, it is not necessary for a user to pay a prepaid amount in advance, and thus it is possible to further improve its convenience.

In addition, in this case, the switching processing unit 54d may calculate the entire amount used in prepaid settlement from the history information of transactions stored by the transaction history storage unit 82, or a transaction amount storage unit that stores the entire amount of transactions may be provided to acquire it from the transaction amount storage unit.

### (Sixth embodiment)

Next, an IC card 1e according to a sixth embodiment will be described with reference to the accompanying drawings.

In the present embodiment, a modification example in which the prepaid storage unit 83 and the credit point storage unit 85 described above are configured as a common storage unit (a storage area) will be described.

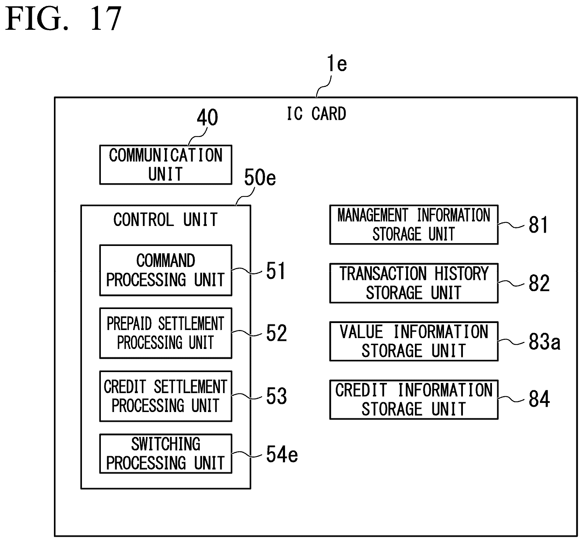

Fig. 17 is a block diagram illustrating a functional configuration example of the IC card 1e of the present embodiment. Meanwhile, the outward appearance of the IC card 1e of the present embodiment, the configuration example of the IC card system 150, and the hardware configuration example of the IC card 1e of the present embodiment are the same as those of the first embodiment shown in Figs. 1 and 2, and thus the description thereof will not be given.

As shown in Fig. 17, the IC card 1e includes the communication unit 40, a control unit 50e, the management information storage unit 81, the transaction history storage unit 82, a value information storage unit 83a, and the credit information storage unit 84.

Here, each unit of the IC card 1e shown in Fig. 17 is realized using the hardware shown in Fig. 2. In addition, in this drawing, the same components as the components shown in Fig. 3 are denoted by the same reference numerals and signs, and the description thereof will not be given.

The value information storage unit 83a (an example of the first value information storage unit) is, for example, a storage unit constituted by the EEPROM 8, and stores a prepaid balance (first value information) corresponding to the remaining amount of an amount paid in advance. In addition, after the settlement function of the IC card 1e is switched from prepaid settlement to credit settlement, the value information storage unit 83a stores credit points (second value information).

In this manner, in the present embodiment, the prepaid storage unit 83 and the credit point storage unit 85 of the first embodiment are configured as a common storage unit.

The control unit 50e is realized by, for example, the CPU 5, the RAM 7, the ROM 6, or the EEPROM 8, and integrally controls the IC card 1e. The control unit 50e includes the command processing unit 51, the prepaid settlement processing unit 52, the credit settlement processing unit 53, and a switching processing unit 54e.

In a case where a predetermined condition is satisfied and information indicating that the user has passed the credit examination is acquired, the switching processing unit 54e validates the function of the credit settlement process, and invalidates the function of the prepaid settlement process. The basic function of the switching processing unit 54e is the same as the switching processing unit 54 of the first embodiment.

In addition, the switching processing unit 54e converts the prepaid balance stored by the value information storage unit 83a as the prepaid storage unit 83 into credit points, and stores the credit points in the value information storage unit 83a as the credit point storage unit 85.

Next, an operation of the IC card 1e according to the present embodiment will be described with reference to the accompanying drawings.

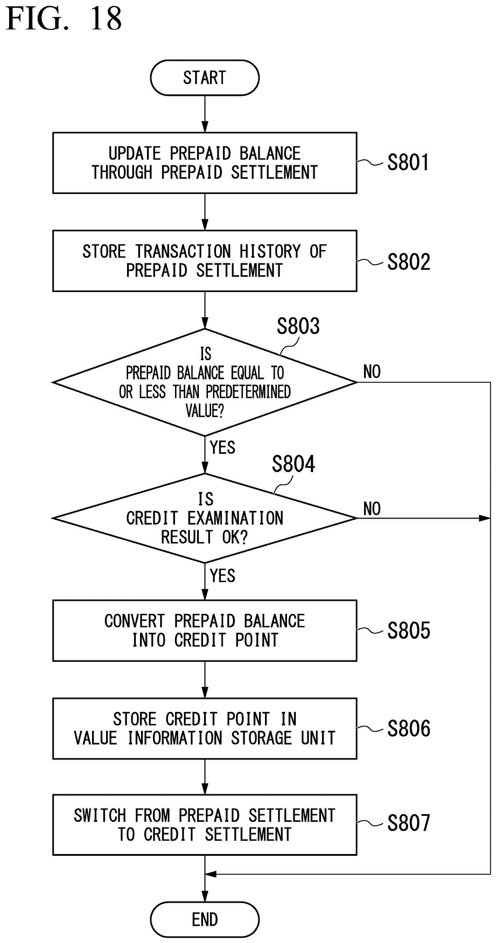

Fig. 18 is a flow chart illustrating an example of an operation of the IC card 1e of the present embodiment. In this drawing, a process of switching from a prepaid settlement function of the IC card 1e to a credit settlement function thereof will be described. In the IC card 1e, for example, in a case where a transaction such as a user's purchase of a commodity occurs, the prepaid settlement process is executed by command processing transmitted from the external device 2.

In Fig. 18, the processes of steps S801 to S804 are the same as the processes of steps S101 to S104 shown in Fig. 5 described above, and thus the description thereof will not be given.

In step S805, the switching processing unit 54e converts the prepaid balance into credit points. The switching processing unit 54e reads out the prepaid balance stored by the value information storage unit 83a, and converts the prepaid balance into credit points.

Next, the switching processing unit 54e stores the converted credit points in the value information storage unit 83a (step S806).

The following process of step S807 is the same as the process of step S107 shown in Fig. 5 described above, and thus the description thereof will not be given.

As described above, in the IC card 1e according to the present embodiment, the prepaid storage unit 83 and the credit point storage unit 85 are configured as a common storage unit. The switching processing unit 54e converts the prepaid balance stored by the value information storage unit 83a as the prepaid storage unit 83 into credit points, and stores the credit points in the value information storage unit 83a as the credit point storage unit 85.

Thereby, in the IC card 1e according to the present embodiment, it is possible to effectively use the processing period of the credit examination while its storage area is saved.

### (Seventh embodiment)

Next, an IC card 1f according to a seventh embodiment will be described with reference to the accompanying drawings.

In the present embodiment, a description will be given of a modification example in which a function of suspending switching from prepaid settlement to credit settlement and a function of switching to prepaid settlement again after switching to credit settlement or switching to credit settlement again after switching to prepaid settlement are added to the above-described first embodiment.

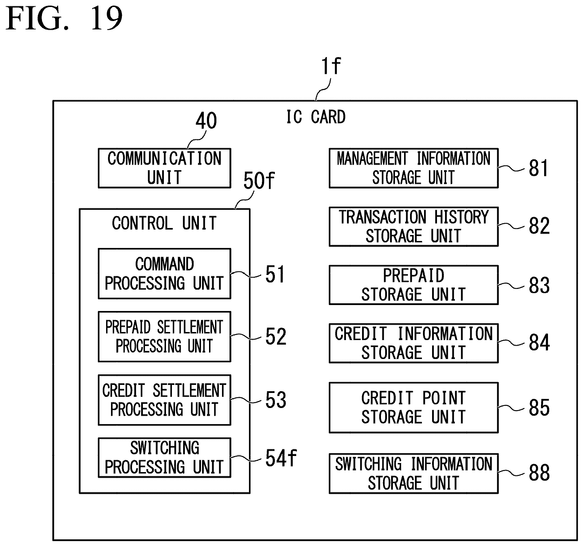

Fig. 19 is a block diagram illustrating a functional configuration example of the IC card 1f of the present embodiment. Meanwhile, the outward appearance of the IC card 1f of the present embodiment, the configuration example of the IC card system 150, and the hardware configuration example of the IC card 1f of the present embodiment are the same as those of the first embodiment shown in Figs. 1 and 2, and thus the description thereof will not be given.

As shown in Fig. 19, the IC card 1f includes the communication unit 40, a control unit 50f, the management information storage unit 81, the transaction history storage unit 82, the prepaid storage unit 83, the credit information storage unit 84, the credit point storage unit 85, and a switching information storage unit 88.

Here, each unit of the IC card 1f shown in Fig. 19 is realized using the hardware shown in Fig. 2. In addition, in this drawing, the same components as the components shown in Fig. 3 are denoted by the same reference numerals and signs, and the description thereof will not be given.

The switching information storage unit 88 is, for example, a storage unit constituted by the RAM 7 or the EEPROM 8, and stores information relating to switching between prepaid settlement and credit settlement. The switching information storage unit 88 stores, for example, a credit switching permission flag, settlement type information indicating the type of settlement in the current function, a prepaid switching flag for giving an instruction for switching from credit settlement to prepaid settlement, and a credit switching flag for giving an instruction for switching from prepaid settlement to credit settlement.

The control unit 50f is realized by, for example, the CPU 5, the RAM 7, the ROM 6, or the EEPROM 8, and integrally controls the IC card 1f. The control unit 50f includes the command processing unit 51, the prepaid settlement processing unit 52, the credit settlement processing unit 53, and a switching processing unit 54f.

The switching processing unit 54f validates the function of the credit settlement process in a case where the above-described predetermined condition (a first condition) is satisfied and information indicating that the user has passed the credit examination is acquired, and in a further case where a second condition for permitting switching to the credit settlement process is satisfied. In this case, the switching processing unit 54f validates the function of the credit settlement process, and invalidates the function of the prepaid settlement process. The basic function of the switching processing unit 54f is the same as that of the switching processing unit 54 of the first embodiment.

Here, the second condition is, for example, a case where the credit switching permission flag stored by the switching information storage unit 88 is "1." In addition, the credit switching permission flag is changed to "1" in a case where a user selects switching to the credit settlement process (or, permission of switching to the credit settlement process), for example, during a settlement process on the terminal screen of the external device 2 that communicates with the IC card 1f.

Meanwhile, for example, the credit switching permission flag may be changed to "1" by selecting permission of switching to credit settlement from next time during the very first issuance process for issuing the IC card 1f by validating the function of prepaid settlement. In addition, in a case where the prepaid balance is equal to or less than a predetermined value (for example, equal to or less than 1000 yen), the credit switching permission flag may be automatically changed to "1."

In addition, in a case where the function of the credit settlement process is validated and then a first switching condition for switching from the function of the credit settlement process to the function of the prepaid settlement process is satisfied, the switching processing unit 54f switches the IC card 1f from the function of the credit settlement process to the function of the prepaid settlement process. In a case where the first switching condition is satisfied, the switching processing unit 54f converts credit points stored by the credit point storage unit 85 into a prepaid balance, stores the prepaid balance in the prepaid storage unit 83, validates the function of the prepaid settlement process, and invalidates the function of the credit settlement process.

Here, the first switching condition is, for example, a case where the prepaid switching flag stored by the switching information storage unit 88 is "1.". In addition, the prepaid switching flag is changed to "1," for example, in a case where a user selects switching from the credit settlement process to the prepaid settlement process during a settlement process on the terminal screen of the external device 2 that communicates with the IC card 1f.

Meanwhile, the prepaid switching flag may be automatically changed to "1," for example, a case where the amount limit of a credit card is exceeded, or a case where the function of credit settlement is stopped due to some kind of reason such as being on the blacklist in card use or the validity period being expired.

In addition, in a case where the function of the prepaid settlement process is validated and then a second switching condition for switching from the function of the prepaid settlement process to the function of the credit settlement process is satisfied, the switching processing unit 54f switches the IC card 1f from the function of the prepaid settlement process to the function of the credit settlement process. In a case where the second switching condition is satisfied, the switching processing unit 54f converts the prepaid balance stored by the prepaid storage unit 83 into credit points, stores the credit points in the credit point storage unit 85, validates the function of the credit settlement process, and invalidates the function of the prepaid settlement process.

Here, the second switching condition is, for example, a case where the credit switching flag stored by the switching information storage unit 88 is "1." In addition, the credit switching flag is changed to "1," for example, in a case where a user selects switching from the prepaid settlement process to the credit settlement process during a settlement process on the terminal screen of the external device 2 that communicates with the IC card 1f.

Next, an operation of the IC card 1f according to the present embodiment will be described with reference to the accompanying drawings.

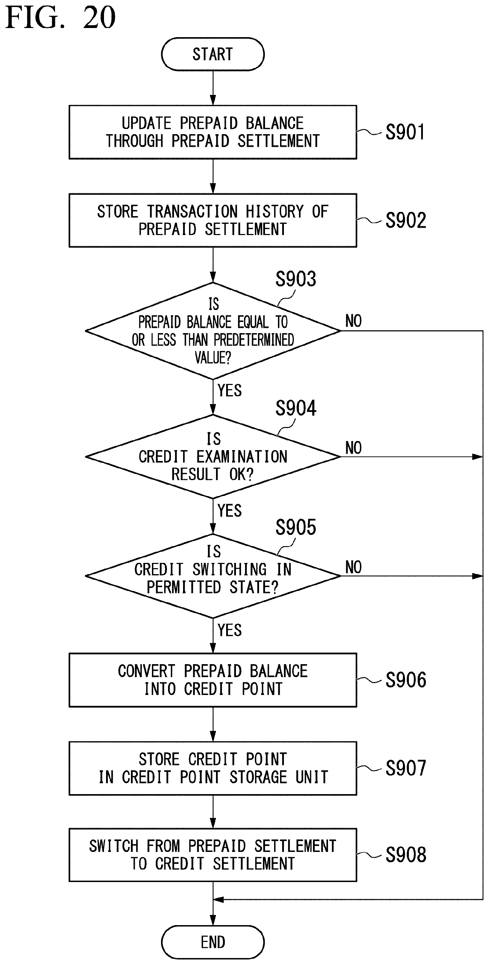

Fig. 20 is a flow chart illustrating an example of an operation of the IC card 1f of the present embodiment. In this drawing, a process of initially switching the prepaid settlement function of the IC card 1f to the credit settlement function thereof will be described. In the IC card If, for example, in a case where a transaction such as a user's purchase of a commodity occurs, the prepaid settlement process is executed by command processing transmitted from the external device 2.

In Fig. 20, the processes of steps S901 to steps S904 are the same as the processes of steps S101 to S104 shown in Fig. 5 described above, and thus the description thereof will not be given.

In step S905, the switching processing unit 54f determines whether the credit switching is in a permitted state. The switching processing unit 54f determines whether the credit switching is in a permitted state depending on whether the credit switching permission flag stored by the switching information storage unit 88 is "1." Meanwhile, the credit switching permission flag is changed to "1" by a user's selection of permission of switching to the credit settlement process, for example, during a settlement process on the terminal screen of the external device 2 that communicates with the IC card 1f. In the credit switching is in a permitted state (step S905: YES), the switching processing unit 54f advances the process to step S906. In addition, in a case where the credit switching is not in a permitted state (step S905: NO), the switching processing unit 54f ends the switching process, and holds the function of prepaid settlement.

In addition, the processes of steps S906 to S908 are the same as the processes of steps S105 to S107 shown in Fig. 5 described above, and thus the description thereof will not be given. Meanwhile, in the present embodiment, the switching processing unit 54f changes the settlement type information of the switching information storage unit 88 to information indicating credit settlement.

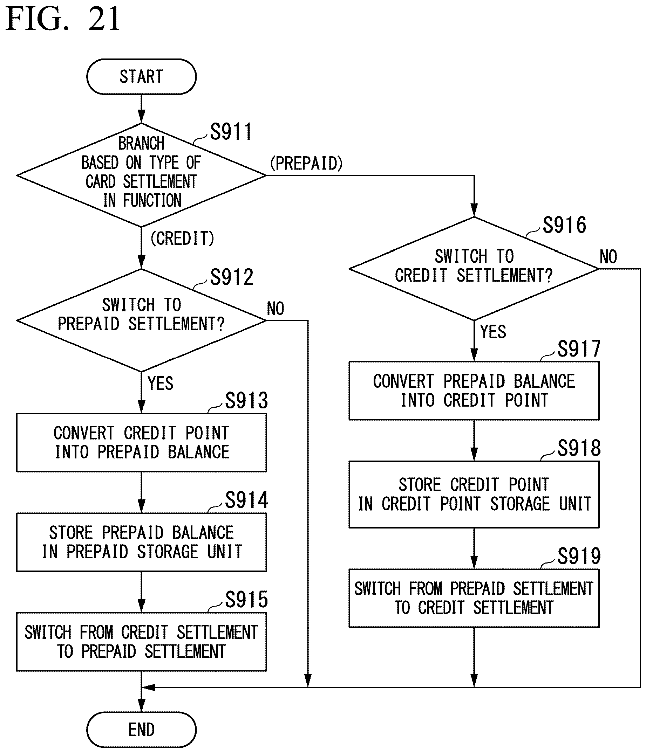

In addition, Fig. 21 is a flow chart illustrating an example of a mutual switching operation of card settlement of the IC card 1f of the present embodiment. The switching process shown in Fig. 21 is a process after the process of initially switching from the prepaid settlement function to the credit settlement function shown in Fig. 20 described above is executed.

As shown in Fig. 21, the switching processing unit 54f executes a branch based on the type of card settlement in the function (step S911). The switching processing unit 54f confirms the settlement type information stored by the switching information storage unit 88, and advances the process to step S912 in a case where the type of card settlement in the function is credit settlement (step S911: credit). In addition, in a case where the type of card settlement in the function is prepaid settlement (step S911: prepaid), the switching processing unit 54f advances the process to step S916.

In step S912, the switching processing unit 54f determines whether switching to prepaid settlement is performed. The switching processing unit 54f determines whether switching to prepaid settlement is performed depending on whether the prepaid switching flag stored by the switching information storage unit 88 is "1." Meanwhile, the prepaid switching flag is changed to "1" by a user's selection of switching to the prepaid settlement process, for example, during a settlement process on the terminal screen of the external device 2 that communicates with the IC card 1f. In a case where the switching to prepaid settlement is performed (step S912: YES), the switching processing unit 54f advances the process to step S913. In addition, in a case where the switching to prepaid settlement is not performed (step S912: NO), the switching processing unit 54f ends the switching process, and holds the function of credit settlement.

In step S913, the switching processing unit 54f converts credit points to the prepaid balance. The switching processing unit 54f reads out the credit points stored by the credit point storage unit 85, and converts the credit points into the prepaid balance. Meanwhile, the switching processing unit 54f may convert the credit points and the prepaid balance at a conversion ratio of 1: 1 (one-to-one), or may convert the credit points into the prepaid balance at a predetermined conversion ratio.

Next, the switching processing unit 54f stores the converted prepaid balance in the prepaid storage unit 83 (step S914).

Next, the switching processing unit 54f switches from credit settlement to prepaid settlement (step S915). The switching processing unit 54f changes the setting information stored by the management information storage unit 81 to thereby validate the function of the prepaid settlement process and invalidate the function of the credit settlement process. That is, the switching processing unit 54f validates setting information of a file relevant to prepaid settlement stored by the management information storage unit 81, and invalidates setting information of a file relevant to credit settlement. In addition, the switching processing unit 54f changes the settlement type information of the switching information storage unit 88 to information indicating prepaid settlement. After the process of step S915, the switching processing unit 54f ends the switching process.

In addition, in step S916, the switching processing unit 54f determines whether switching to credit settlement is performed. The switching processing unit 54f determines whether switching to credit settlement is performed depending on whether the credit switching flag stored by the switching information storage unit 88 is "1." Meanwhile, the credit switching flag is changed to "1" by a user's selection of switching to the credit settlement process, for example, during a settlement process on the terminal screen of the external device 2 that communicates with the IC card 1f. In a case where the switching to credit settlement is performed (step S916: YES), the switching processing unit 54f advances the process to step S917. In addition, in a case where the switching to credit settlement is not performed (step S916: NO), the switching processing unit 54f ends the switching process, and holds the function of prepaid settlement.

In step S917, the switching processing unit 54f converts the prepaid balance into credit points. The switching processing unit 54f reads out the prepaid balance stored by the prepaid storage unit 83, and converts the prepaid balance into the prepaid balance.

Next, the switching processing unit 54f stores the converted credit points in the credit point storage unit 85 (step S918).

Next, the switching processing unit 54f switches from prepaid settlement to credit settlement (step S919). The switching processing unit 54f changes the setting information stored by the management information storage unit 81 to thereby validate the function of the credit settlement process and invalidate the function of the prepaid settlement process. That is, the switching processing unit 54f validates setting information of a file relevant to credit settlement stored by the management information storage unit 81, and invalidates setting information of a file relevant to prepaid settlement. In addition, the switching processing unit 54f changes the settlement type information of the switching information storage unit 88 to information indicating credit settlement. After the process of step S919, the switching processing unit 54f ends the switching process.

As described above, in the IC card If according to the present embodiment, the switching processing unit 54f validates the function of the credit settlement process in a case where the first condition which is a predetermined condition based on information relating to a transaction is satisfied and the second condition for permitting switching to the credit settlement process is satisfied. That is, in a case where the first condition is satisfied and the second condition is satisfied, the switching processing unit 54f converts the prepaid balance stored by the prepaid storage unit 83 into credit points, stores the credit points in the credit point storage unit 85, validates the function of the credit settlement process, and invalidates the function of the prepaid settlement process.

Thereby, in the IC card 1f according to the present embodiment, even in a case where the above-described predetermined condition (the first condition) for validating the function of credit settlement is satisfied, transition to credit settlement can be suspended by holding the function of prepaid settlement, for example, at a user's request. Thus, in the IC card 1f according to the present embodiment, it is possible to cope with the user's various requests, and to improve its convenience.

In addition, in the present embodiment, in a case where the function of the credit settlement process is validated and then the first switching condition for switching from the function of the credit settlement process to the function of the prepaid settlement process is satisfied, the switching processing unit 54f switches from the function of the credit settlement process to the function of the prepaid settlement process. In a case where the first switching condition is satisfied, the switching processing unit 54f converts the credit points stored by the credit point storage unit 85 into a prepaid balance, stores the prepaid balance in the prepaid storage unit 83, validates the function of the prepaid settlement process, and invalidates the function of the credit settlement process.

Thereby, in the IC card 1f according to the present embodiment, it is possible to switch from the function of the credit settlement process to the function of the prepaid settlement process, for example, at a user's request or in a case where credit settlement cannot be used, and to improve its convenience. In the IC card 1f according to the present embodiment, it is possible to increase variations in conditions and applications, and to select an application (a settlement method) that meets a user's request.

In addition, in the present embodiment, in a case where the function of the prepaid settlement process is validated and then the second switching condition for switching from the function of the prepaid settlement process to the function of the credit settlement process is satisfied, the switching processing unit 54f switches from the function of the prepaid settlement process to the function of the credit settlement process. In a case where the second switching condition is satisfied, the switching processing unit 54f converts the prepaid balance stored by the prepaid storage unit 83 into credit points, stores the credit points in the credit point storage unit 85, validates the function of the credit settlement process, and invalidates the function of the prepaid settlement process.

Thereby, in the IC card 1f according to the present embodiment, it is possible to switch from the function of the prepaid settlement process to the function of the credit settlement process, for example, at a user's request, and to improve its convenience. In the IC card 1f according to the present embodiment, it is possible to increase variations in conditions and applications, and to select an application (a settlement method) that meets a user's request.

Meanwhile, in the above-described seventh embodiment, a description has been given of an example in which a function of suspending switching from prepaid settlement to credit settlement and a function of switching to prepaid settlement again after switching to credit settlement or switching to credit settlement again after switching to prepaid settlement are added to the first embodiment, but there is no limitation thereto. For example, the present embodiment may be applied to any of the second to sixth embodiments instead of the first embodiment. In addition, any of the function of suspending switching from prepaid settlement to credit settlement and the function of switching to prepaid settlement again after switching to credit settlement or switching to credit settlement again after switching to prepaid settlement may be added to the seventh embodiment.

In addition, in the above-described seventh embodiment, although an example in which, in the IC card 1f, the function of prepaid settlement is initially valid and switching to credit settlement is suspended has been described, the function of credit settlement may be initially valid and switching to prepaid settlement may be suspended. In addition, the following modification examples can be applied to the above-described seventh embodiment.
(1) In the IC card 1f, for example, how to switch at the time of prepaid settlement to be first performed (when an issuance procedure for inputting user information is performed) may be registered, and switching to prepaid settlement or credit settlement may be performed in the case of meeting the condition.
(2) In the IC card 1f, for example, settlement may be first performed using prepaid settlement, and then settlement may be performed using prepaid settlement or credit settlement at a user's will (in the external device 2 or the like).
(3) In the IC card 1f, for example, settlement may be first performed using prepaid settlement, credit settlement may be selected after that, and then switching to the prepaid settlement may be performed again. In this case, in the IC card 1f, accumulated credit points may be switches to money, or may be held as credit points for the future. In addition, the IC card 1f may be subject to payment of a fixed amount of money in switching from credit settlement to prepaid settlement.
(4) In the IC card 1f, for example, settlement may be first performed using prepaid settlement, prepaid settlement may also be selected after that, and switching to credit settlement may be performed at a necessary timing. Here, the necessary timing may be switched, for example, at a user's will (in the external device 2 or the like), or may be switched by a prepaid balance.

Even when prepaid settlement is normally validated in order to prevent overuse, the IC card 1f according to the present embodiment can be easily switched to credit settlement, for example, in a case where shopping exceeding a prepaid balance is necessary anyway.

In addition, in each of the embodiments, although an example in which the IC card 1 (1a to 1f) communicates with the external device 2 through the contact portion 3 has been described, the IC card may be configured to communicate with the external device 2 through a contactless interface using a coil or the like.

In addition, in each of the embodiments, the IC card 1 (1a to 1f) is configured to include the EEPROM 8 as a rewritable non-volatile memory, but there is no limitation thereto. For example, the IC card 1 (1a to 1f) may include a flash memory, a ferroelectric random access memory (FeRAM), or the like instead of the EEPROM 8.

In addition, each of the embodiments, an example in which the IC card 1 (1a to 1f) is used as an example of a portable electronic device has been described, but there is no limitation thereto. The portable electronic device may be an electronic device such as, for example, an IC tag or a subscriber identity module (SIM) card which is not formed in the shape of a card.

In addition, in each of the embodiments, as an example of credit transaction settlement and a credit transaction card, credit settlement and a credit card have been described, but there is no limitation thereto. Examples of the credit transaction card include a credit card for postpaid settlement, a debit card for simultaneous debt settlement, and the like, and other credit transaction cards such as a debit card may be applied to each of the embodiments. In addition, the debit card may have, for example, a payback function of paying back the shortage of an account balance.

In addition, although an example in which the embodiments are implemented independently of each other has been described, there is no limitation thereto, and some or all of the embodiments may be implemented in combination with each other. For example, the second embodiment has been described as a modification example of the first embodiment, but may be applied to the third to sixth embodiments instead of the first embodiment.

In addition, in each of the embodiments, an example in which the IC card 1 (1a to 1f) switches from prepaid settlement to credit settlement in a case where a predetermined condition based on information relating to a transaction is satisfied has been described, a process of returning from credit settlement to prepaid settlement may be executed. The IC card 1 (1a to 1f) may switch from credit settlement to prepaid settlement, for example, in a case where a predetermined condition is satisfied such as a case where the amount limit of a credit exceeded. In this manner, the IC card 1 (1a to 1f) can be used as a prepaid card during a period when it cannot be used as a credit card, and thus it is possible to further improve its convenience.

According to at least one embodiment described above, in a case where a predetermined condition based on information relating to a transaction is satisfied, the switching processing unit 54 converts the prepaid balance stored by the prepaid storage unit 83 into credit points, stores the credit points in the credit point storage unit 85, validates the function of the credit settlement process, and invalidates the function of the prepaid settlement process. This makes it possible to effectively use the processing period of the credit examination, and to improve convenience.

The above embodiment can be represented as follows.

A portable electronic device including:
a first value information storage unit that stores first value information corresponding to a remaining amount of an amount paid in advance;
a second value information storage unit that stores second value information capable of being used in a credit transaction settlement;
a storage unit that stores information relating to at least a computer-executable program; and
a hardware processor that executes a program stored in the storage unit,
wherein the hardware processor executes the program, to thereby
perform a prepaid settlement process of performing a settlement by subtracting the first value information stored by the first value information storage unit in accordance with an amount of a transaction, and
in a case where a predetermined condition based on information relating to the transaction is satisfied, convert the first value information stored by the first value information storage unit into the second value information, store the second value information in the second value information storage unit, validate a function of a credit transaction settlement process, and invalidate a function of the prepaid settlement process.

Meanwhile, a program for realizing the function of each component included in the IC card system 150 in the embodiment is recorded in a computer readable recording medium, and thus a process in each component included in the IC card system 150 described above may be performed by causing a computer system to read and execute the program recorded in this recording medium. The wording "causing a computer system to read and execute the program recorded in the recording medium" referred to here includes installing the program in the computer system. The term "computer system" referred to here is assumed to include an OS and hardware such as peripheral devices.

In addition, the term "computer readable recording medium" refers to a flexible disk, a magneto-optic disc, a ROM, a portable medium such as a CD-ROM, or a storage device such as a hard disk built into a computer system.

While certain embodiments of the present invention have been described, these embodiments have been presented by way of example only, and are not intended to limit the scope of the invention. Indeed, these embodiments described herein may be embodied in a variety of other forms, and furthermore, various omissions, substitutions and changes in the form of the embodiments described herein may be made without departing from the spirit of the present invention. The appended claims and their equivalents are intended to cover such forms or modifications as would fall within the scope and spirit of the present invention.

## Claims

1. A portable electronic device comprising:
a first value information storage unit that stores first value information corresponding to a remaining amount of an amount paid in advance;
a second value information storage unit that stores second value information capable of being used in a credit transaction settlement;
a transaction processing unit that performs a prepaid settlement process of performing a settlement by subtracting the first value information stored by the first value information storage unit in accordance with an amount of a transaction; and
a switching processing unit that, in a case where a predetermined condition based on information relating to the transaction is satisfied, converts the first value information stored by the first value information storage unit into the second value information, stores the second value information in the second value information storage unit, validates a function of a credit transaction settlement process, and invalidates a function of the prepaid settlement process.

2. The portable electronic device according to claim 1, wherein, in a case where the first value information stored by the first value information storage unit is equal to or less than a predetermined value as a case where the predetermined condition is satisfied, the switching processing unit validates the function of the credit transaction settlement process, and invalidates the function of the prepaid settlement process.

3. The portable electronic device according to claim 1, wherein, in a case where the number of transactions using the prepaid settlement process reaches a predetermined number of times as a case where the predetermined condition is satisfied, the switching processing unit validates the function of the credit transaction settlement process, and invalidates the function of the prepaid settlement process.

4. The portable electronic device according to claim 1, wherein, in a case where a predetermined period of time or more has elapsed since a reference time serving as a reference as a case where the predetermined condition is satisfied, the switching processing unit validates the function of the credit transaction settlement process, and invalidates the function of the prepaid settlement process.

5. The portable electronic device according to any one of claims 1 to 4, wherein, in a case where the first value information is a negative value when the first value information is converted into the second value information, the switching processing unit performs a settlement process on an amount corresponding to the negative value through the credit transaction settlement process.

6. The portable electronic device according to any one of claims 1 to 5, wherein, when the first value information is converted into the second value information, the switching processing unit performs a settlement process on an amount corresponding to an initial value of the first value information which is set during nonuse through the credit transaction settlement process.

7. The portable electronic device according to any one of claims 1 to 6, wherein, in a case where a predetermined condition is satisfied and information indicating that a user has passed a credit examination is acquired, the switching processing unit validates the function of the credit transaction settlement process, and invalidates the function of the prepaid settlement process.

8. The portable electronic device according to any one of claims 1 to 7, wherein the first value information storage unit and the second value information storage unit are configured as a common storage unit, and
the switching processing unit converts the first value information stored by the first value information storage unit into the second value information, and stores the second value information in the first value information storage unit as the second value information storage unit.

9. The portable electronic device according to any one of claims 1 to 8, wherein, in a case where a first condition which is a predetermined condition based on information relating to the transaction is satisfied and a second condition for permitting switching to the function of the credit transaction settlement process is satisfied, the switching processing unit converts the first value information stored by the first value information storage unit into the second value information, stores the second value information in the second value information storage unit, validates a function of a credit transaction settlement process, and invalidates a function of the prepaid settlement process.

10. The portable electronic device according to any one of claims 1 to 9, wherein, in a case where the function of the credit transaction settlement process is validated and then a first switching condition for switching from the function of the credit transaction settlement process to the function of the prepaid settlement process is satisfied, the switching processing unit converts the second value information stored by the second value information storage unit into the first value information, stores the first value information in the first value information storage unit, validates the function of the prepaid settlement process, and invalidates the function of the credit transaction settlement process.

11. The portable electronic device according to claim 10, wherein, in a case where the function of the prepaid settlement process is validated and then a second switching condition for switching from the function of the prepaid settlement process to the function of the credit transaction settlement process is satisfied, the switching processing unit converts the first value information stored by the first value information storage unit into the second value information, stores the second value information in the second value information storage unit, validates the function of the credit transaction settlement process, and invalidates the function of the prepaid settlement process.

12. An IC card comprising:
an IC module; and
wherein the IC module includes
a first value information storage unit that stores first value information corresponding to a remaining amount of an amount paid in advance,
a second value information storage unit that stores second value information capable of being used in a credit transaction settlement,
a transaction processing unit that performs a prepaid settlement process of performing a settlement by subtracting the first value information stored by the first value information storage unit in accordance with an amount of a transaction, and
a switching processing unit that, in a case where a predetermined condition based on information relating to the transaction is satisfied, converts the first value information stored by the first value information storage unit into the second value information, stores the second value information in the second value information storage unit, validates a function of a credit transaction settlement process, and invalidates a function of the prepaid settlement process, and
a card body having the IC module embedded therein.
